# EUROPÄISCHE PATENTSCHRIFT

(11) **EP 1 662 639 B1**
(45) Veröffentlichungstag und Bekanntmachung des Hinweises auf die Patenterteilung: **18.06.2008**
(21) Anmeldenummer: 04292775.6
(22) Anmeldetag: 24.11.2004
(51) Int. Cl.: H02K 13/00, H02K 13/10, H01R 39/02, H01R 39/18

(54) **Verfahren zum Anpassen der Kohlebürsten eines bürstenbehafteten Gleichstrommotors, sowie Gleichstrommotor**
Method to adapt the carbon brushes of a DC commutator motor, and a DC motor
Procédé pour adapter les balais de charbon dans un moteur à courant continu, et un moteur à courant continu

(43) Veröffentlichungstag der Anmeldung: 31.05.2006
(73) Patentinhaber: Alcatel Lucent, 75008 Paris (FR)
(72) Erfinder: Nägele, Andreas, 79793 Wutöschingen (DE)
(74) Vertreter: Brose, Gerhard

(56) Entgegenhaltungen:
- EP-A- 0 582 516
- EP-A- 0 984 546
- DE-C1- 19 517 403

## Beschreibung

Die Erfindung betrifft ein Verfahren zum Anpassen der Kohlebürsten eines bürstenbehafteten Gleichstrommotors an die Krümmung des Kommutators des Gleichstrommotors nach dem Oberbegriff des Anspruchs 1 und einen bürstenbehafteten Gleichstrommotor nach dem Oberbegriff des Anspruchs 3.

Bürstenbehaftete Gleichstrommotoren sind, wie jedes andere bewegte Teil, von Anfang an einem Verschleiß unterworfen. Auch die Kohlebürsten eines Gleichstrommotors sind von Anfang an einer Abnutzung unterworfen. Hier liegt der Sachverhalt jedoch so, daß die anfängliche Abnutzung erwünscht ist, weil sich erst dadurch die Kohlebürsten an die Krümmung des Kommutators anpassen. Erst danach stellt sich auch ein gleichmäßiger Lauf ein, der es dann erlaubt, die in der Regel bei Inbetriebnahme erforderlichen Einstellungen so durchzuführen, daß anschließend nicht mehr nachjustiert werden muß.

Es ist nun bekannt, beispielsweise aus EP 0 984 546 A2, während dieser "Einlaufzeit" dem Motor einen rauhen Lauf aufzuzwingen. Im Beispiel erfolgt dies dadurch, daß der Motor mit einer Wechselspannung sehr niedriger Frequenz betrieben wird, so daß sich die Laufrichtung ständig umkehrt. Insbesondere, wenn eine Vielzahl von Motoren gleichzeitig diesem Verfahren unterzogen werden sollen, ist die Bereitstellung einer solchen Wechselspannung nicht gerade einfach. Durch diesen rauhen Lauf wird die Stromaufnahme des Motors deutlich erhöht. Dies hat eine höhere Belastung und damit auch ein schnelleres Einlaufen der Kohlebürsten zur Folge. Es ist auch bekannt, den Motor mechanisch zu belasten, um so die elektrische Belastung, insbesondere der Kohlebürsten, weiter zu verstärken.

Aus EP 0 582 516 ist bekannt, daß ein Allstrommotor auch mit phasenanschnittgesteuertem Wechselstrom betrieben werden kann, dabei aber eine starke Bürstenabnutzung aufweist. Diese Schrift zeigt auch, daß ein Allstrommotor auch mit Pulsweitenmodulation betrieben werden kann.

Der Erfindung liegt die Aufgabe zugrunde, ein Verfahren anzugeben, das mit weniger Aufwand auskommt.

Diese Aufgabe wird erfindungsgemäß gelöst durch ein Verfahren nach der Lehre des Anspruchs 1.

Die Erfindung nutzt die Erkenntnis, daß der Betrieb mit einer aus einer Wechselspannung durch Gleichrichtung ohne Glättung entstandenen Betriebsspannung nicht nur denkbar einfach, sondern auch ausreichend rauh ist und damit das gewünschte Einlaufen mit geringstem Aufwand auch in der Massenproduktion ermöglicht.

Weitere Ausgestaltungen der Erfindung sind dem Unteranspruch 2 und der nachfolgenden Beschreibung zu entnehmen.

Im folgenden wird die Erfindung weiter erläutert:

Die einfache Anordnung aus einem Einphasen-Netztransformator mit nachfolgender Diode kann die für dieses Verfahren erforderliche Betriebsspannung zur Verfügung stellen. Damit ergibt sich eine pulsierende Gleichspannung, bei der jede zweite Halbwelle fehlt. Dies ist eine ausreichend rauhe Betriebsspannung, die den gewünschten rauhen Einlaufbetrieb gewährleistet. Die Spannungshöhe kann so eingestellt werden, daß der Effektivwert der Betriebsspannung etwa der Nennspannung des Motors entspricht. Durch Variation der Spannung in den zulässigen Grenzen kann auch die Einlaufzeit beispielsweise an einen 24-Stunden-Rhythmus angepaßt werden.

Die unerwünschte unsymmetrische Betriebsweise des Transformators kann verhindert werden, wenn gleichzeitig durch eine umgekehrt gepolte Diode ein weiterer Motor, in der Praxis eine etwa gleiche Zahl weiterer Motoren, dem Verfahren unterworfen wird. Allerdings hat sich in der Praxis auch gezeigt, daß selbst bei einer Betriebsspannung, die sich durch Vollweggleichrichtung ergibt, immer noch eine ausreichende Belastung gegeben ist.

Mit diesem Verfahren wird innerhalb von 24 Stunden ein gutes Einlaufen und damit ein gutes Anpassen der Kohlebürsten an die Krümmung des Kommutators erreicht. Eine weitere Verkürzung der Einlaufzeit ist aus betrieblichen Gründen ohnehin nicht erwünscht.

Dieses Verfahren hat sich als so effektiv erwiesen, daß die Motoren während Ihrer Einlaufzeit auch nicht mechanisch belastet werden müssen. Dies reduziert den Aufwand beträchtlich.

## Patentansprüche

1. Verfahren zum Anpassen der Kohlebürsten eines bürstenbehafteten Gleichstrommotors an die Krümmung des Kommutators des Gleichstrommotors, bei dem während des Verfahrens dem Gleichstrommotor ein rauher Lauf aufgezwungen wird, **dadurch gekennzeichnet, daß** die Betriebsspannung aus einer Wechselspannung durch Gleichrichtung ohne Glättung entstanden ist.

2. Verfahren nach Anspruch 1, **dadurch gekennzeichnet, daß** der Gleichstrommotor während des Verfahrens mechanisch nicht belastet wird.

## Claims

1. Method for the adaptation of the carbon brushes of a brushed direct current motor to the curve of the commutator of the direct current motor in which, during the method, a rough running is forced on the direct current motor, **characterised in that** the operating voltage has come from an alternating voltage through rectification without smoothing.

2. Method according to Claim 1, **characterised in that** the direct current motor is not under mechanical loading during the method.

## Revendications

1. Procédé d'adaptation des balais d'un moteur à courant continu doté de balais à la courbure du commutateur du moteur à courant continu, avec lequel une course rugueuse est imposée au moteur à courant continu pendant le procédé, **caractérisé en ce que** la tension de service nominale résulte d'une tension alternative par un redressement sans lissage.

2. Procédé selon la revendication 1, **caractérisé en ce que** le moteur à courant continu n'est pas chargé mécaniquement pendant le procédé.
